# EUROPEAN PATENT SPECIFICATION

(11) **EP 1 175 293 B1**
(45) Date of publication and mention of the grant of the patent: **14.01.2004**
(21) Application number: 00923130.9
(22) Date of filing: 05.04.2000
(51) Int. Cl.: B29C 47/92, B29C 47/10, B29C 47/06, G01G 11/08

(54) **EXTRUSION APPARATUS AND METHOD**
EXTRUSIONSVORRICHTUNG UND VERFAHREN
APPAREIL ET PROCEDE D'EXTRUSION

(30) Priority: 06.04.1999 US 128162 P
(43) Date of publication of application: 30.01.2002
(73) Proprietor: Maguire Products, Inc., Aston, PA 19014 (US)
(72) Inventor: MAGUIRE, Stephen B., Glen Mills, Pennsylvania 19432 (US)
(74) Representative: Ouzman, Beverley Nicola Claire
(86) International application number: PCT/US2000/009051
(87) International publication number: WO 2000/059708

(56) References cited:
- WO-A-98/51458
- DE-A- 3 534 734
- DE-A- 19 820 709
- US-A- 4 784 595
- US-A- 5 128 077

## Description

### Background of the Invention--Field of the Invention

This invention relates to a method for controlling batch feed operation of an extrude screw according to the pre-characterising part of claim 1 and to an apparatus for extruding a multilayer plastic sheet including a plurality of extruder screws according to the pre-characterising part of claim 4.

A method and an apparatus of this type is known from e.g. DE-A- 198 20 709 and US-A 5 128 077.

### Background of the Invention--Description of the Prior Art

Extrusion is a process for producing continuous plastic shapes and is used to make plastic pipe, flat plastic sheet, plastic film and other shapes often referred to as "profiles". Extruded plastic products may consist of a single layer of plastic or multiple plastic layers.

One familiar product made by extrusion is the plastic beverage cup. The product is formed into the cup shape from a continuously extruded flat sheet of plastic material. Typically, the cup is made by vacuum forming the extruded flat plastic sheet into cup shapes and then die cutting the cup shapes from the extruded sheet, preferably in a continuous process.

To reduce cost of raw plastic material used in manufacturing each cup, it is advantageous to make the plastic sheet, from which the cups are vacuum formed, using as much reprocessed, reclaimed, off-color, off-specification or other low cost plastic material as possible, as contrasted to more expensive virgin plastic resin material.

However, government regulations and private industry standards require that only virgin plastic resin material be used on cup inside surfaces which contact food and beverages contained in the cup for human consumption. Hence, these government regulations and private industry standards weigh against manufacture of cups entirely from lower cost material which has been reprocessed or reclaimed, is off-color, is off-specification, etc.

Color is an important factor for consumer acceptance. Coloring agents and colored plastic are even more expensive than virgin plastic resin material. Hence, making a colored cup which is attractive to consumers is more expensive than manufacturing an uncolored cup from previously reprocessed or reclaimed plastic material. A cup made entirely from previously reprocessed or reclaimed plastic material, with no coloring, aesthetically would be most unattractive.

As the foregoing illustrates, there is a need to produce plastic sheet using low cost materials but nevertheless complying with government regulations and private industry standards, and having high quality color so as to be attractive to consumers.

While this discussion concerns plastic cups, the same competing considerations, namely using low cost plastic resin material, meeting requirements of government regulations and private industry standards, and having high consumer attractiveness, apply to many plastic products.

A compromise solution has been to manufacture plastic sheet, from which cups and other products may be formed, in multiple layers, typically three layers, with each layer addressing one of the competing considerations. For example, in the case of plastic cups the inner layer of the cup defining the cup inner surface which contacts the food or beverage is manufactured from food grade virgin plastic resin and hence is quite expensive. The outer layer of the sheet is made in a bright, attractive color, typically brilliant red, blue or green, and is also quite expensive. The middle layer of the sheet, constituting the majority of the sheet and hence the majority of the cup or other product formed from the sheet, is made from reprocessed, reclaimed or other low cost plastic material. Thus, typical three layer plastic sheets used to manufacture such cups have the inner and outer layers respectively made from food grade virgin plastic resin material and from brilliantly colored plastic material, with each layer constituting about fifteen percent (15%) of total sheet weight. The middle layer formed from lower cost previously molded or extruded, reprocessed or reclaimed plastic material constitutes about seventy percent (70%) of the sheet weight and hence about seventy percent (70%) of the finished plastic cup or other product.

To produce such multilayer sheets, for example sheets of three layers, three extruders are used, arranged so that resin materials separately plasticized by each of the three extruders are fed separately into a common sheeting die. The die forms the sheet product in layers with plasticized material from a first extruder providing the top layer of the sheet, plasticized material from a second extruder providing the middle layer of the sheet and plasticized material from a third extruder providing the bottom layer of the sheet. Extruder speeds are periodically adjusted in an attempt to produce desired layer thickness and hence the desired percentages of (i) food grade virgin material, (ii) previously molded or extruded, reprocessed or reclaimed plastic material, and (iii) brilliantly colored plastic material.

It is difficult to precisely maintain the desired percentages of each layer in the final sheet product as the product emerges from the sheeting die.

Since the layers cannot be weighed individually, the only two ways to determine the percentage of material in each layer are by carefully measuring the layer cross-section under a microscope or by measuring rates of consumption of the respective raw plastic resin materials which are fed by the extruders to the sheeting die to produce each layer. Measuring cross section of the typically very thin layers requires using a microscope and is too time consuming and disruptive of the manufacturing process. Accordingly, measuring and regulating consumption rate of plastic resin material by the extruder is the only practical method to control layer weight percentage in plastic multilayer sheet.

The traditional way of performing extrusion control does not involve a batch blender. Traditionally, extrusion control is effectuated by supplying material to the extruder screen at a continuous variable rate and monitoring the rate of loss of material from the supply hopper via which the material is supplied.

Use of the term "feedback" in the context of extrusion control, which usage is conventional in extrusion industry parlance, maybe somewhat misleading. Conventionally, the term "feedback" denotes use of some parameter or data measured at the output or end of a process to regulate, control or adjust some parameter at the input or beginning of a process, to optimize the operation of the process to produce a desired result. However, in conventional extrusion control, no data are collected or parameters measured at the output end of the extruder screw or the outlet from the extruder die where the finished product emerges, and no such data or parameter measurements are furnished to or used to control the gravimetric blender or other single component weighing device to regulate the amount of material and/or the rate of supply thereof to the extruder screw.

This most popular form of such control for plastic extruders is sometimes referred to as "weight loss feedback". In a "weight loss feedback" system, a hopper above the extruder includes an associated load cell and supplies the extruder with plastic resin material to be plasticized. Weight of the hopper, which is representative of the amount of material remaining in the hopper, is continuously monitored by the load cell. This continuous weight data, which reflects consumption of material in the hopper and hence gives rise to the term "weight loss feedback", is used to control extruder speed based on such "feedback."

Gravimetric blenders or other single component weighing devices, when mounted on the feed throat of an extruder, are less frequently been used to measure by weight and to record exact amounts of plastic resin material consumed by the extruder. This information is then used by human operators to manually adjust extruder speed and hence extrusion output.

It is also known to control such gravimetric blenders or single component weighing devices providing plastic material to an extruder.

This second and less frequently used form of control for plastic extruders is "batch process feedback". In a "batch process feedback" system, the weight of a batch of material provided to the extruder and the time for the batch to be completely consumed by the extruder are both measured. Conventional practice is to divide the measured weight by the measured time to determine a rate of material consumption by the extruder. The amount of material consumed by the extruder during the given time is then compared to the desired specification and extruder speed is adjusted according to the comparison.

Such batch process feeding of extruders is less common and has a disadvantage as compared to weight loss-based systems for feeding extruders--batch process feeding supplies updated information for correction of extruder speed only once while a batch is fed, which is typically every one or two minutes.

Gravimetric blenders have become very widely used in plastics industries. Gravimetric blenders are primarily used in the plastic extrusion industry to supply an accurately formulated blend of materials to an extruder screw. The above-described disadvantage of batch process feeding notwithstanding, the small incremental expense associated with using a gravimetric blender (which may already be present in the manufacturing facility to formulate and blend the resin material being supplied to the extrusion screw) to additionally provide data for use in controlling speed of an extruder supplied with plastic resin material by the gravimetric blender, has popularized such batch process feeding for extruders.

To achieve reliable control of an extruder, it is important to know the rate of extrusion to a very high degree of certainty and to maintain the speed of the extruder without variation. Extruder speed should be adjusted only when a sufficient error in extruder output rate has occurred to warrant a change.

Extruder throughput rate is determined by (i) batch weight and (ii) batch consumption time. Using a gravimetric blender, batch weight can be measured accurately, to within a gram or even a fraction of a gram. Accurate batch consumption time is not as easily measured.

Determination of batch consumption time conventionally depends on measuring time elapsing from when material falls below the level of a material level sensor, thereby marking the commencement of feeding of that batch, until the next batch of material falls below the level of the material sensor. Since exposing the resin material level sensor commences the timing, determining when the sensor is exposed is critical to achieving accurate resin material consumption measurements and hence adequate extruder speed control.

Many factors can interfere with determining when a resin material level sensor is exposed. The granular plastic resin material does not always flow away from the sensor uniformly. A rotating mixing blade may come to rest in different positions at the end of each mix cycle, creating differences in the manner in which the resin material accumulates in a mix chamber where the level sensor is located.

Efforts to solve this problem heretofore have focused primarily on mechanical design of the mix chamber and positioning of the resin material level sensor. One approach has been to use a second mix/material storage chamber, below the gravimetric blender, with the second mix/resin material storage chamber being of a design allowing resin material to flow downwardly more evenly. In this approach, a separate resin material level sensor has been used in the second chamber to measure more accurately the presumably repeatable material fill time and hence a repeatable cycle time.

Known attempts to achieve smooth control of extruder feeding using software have recognized that measuring time consumption of resin material batches using the known and conventional approaches as outlined above is less than precise and have focused on various averaging techniques.

One prior art practice, is to average data from ten batches of resin material most recently supplied to the extruder. With this approach, errors are also averaged. Hence the "error" the system seeks to eliminate by adjustment is reduced to one-tenth (1/10) of the actual largest error associated with a single batch. Since the error the system uses for adjustment is only one tenth of actual error for a given batch, any problem extant in the extrusion process may require consumption of ten batches before the error, and the problem associated with the error, fully manifest themselves. Accordingly, averaging is not a particularly good approach. Nevertheless averaging has been used heretofore.

In manufacture of film for shrink wrapping, typically a three-layer film may be fabricated. The film specification may call for three-layer sheet to be produced having a given thickness with twenty percent (20%) of the thickness defined by the two outer layers and sixty percent (60%) of the thickness defined by the interior layer. Typically such shrink wrap films may be produced at a rate of 589.7 kg (1300 lbs) of resin material per hour. Techniques used heretofore to control film thickness involve regulation of extruder motor speed as outlined above and regulation of speed of the take-off rolls receiving the extruder output. Periodically the thickness of the extruded film is measured. If the film thickness is too great, extruder motor speed is reduced. In that regard it should be noted that extruder die size does not control film thickness, speed of the motor driving the extruder screw and/or speed of the rolls taking up the film as the film emerges from the extrusion die regulate thickness of the film.

A continuing problem in the industry is use of excess material to fabricate a given film. For example, if a continuous extrusion process uses 589.7 kg/hr (1300 lbs/h) of resin material, the resin material costs one dollar ($1.00) per kilogram and the process operates six thousand (6,000) hours per year, cost of material for the extrusion process for one year is eight million dollars ($8,000,000.00). A three percent material feed error, which is typical in conventional extrusion equipment, amounts to a loss of two hundred and forty thousand dollars ($240,000.00) per year through use of excess material.

International Patent publication WO98/51458 discloses a method for weight blending of granular material including the steps of generating at a remote site a command for desired operation of granular material weight blending apparatus, encoding the command into transportable time-stable machine readable tangible storage media, transporting the media to a bar code reader operatively connected to the granular material weight blending apparatus, scanning the tangible material having the command encoded thereon to read the command and providing the read command as input to a microprocessor operatively connected to the granular material weight blending apparatus for regulating operation of the same. WO98/51458 does not specifically disclose controlling operation of an extruder or controlling feed of material to an extruder based solely on measurement of parameters which are upstream relative to the extruder feedscrew.

US Patent 5,128,077 suggests, at column 2, lines 5 through 11, relating the rotational speed of an extruder screw and the speed of a take-away line removing extrudate from the extruder screw, with measured dimensions of a multi-component extrudate profile output by the extruder screw, with the measured dimensions being taken at downstream locations where the relative contributions to the measurement from the output of each extruder screw are distinctly different from each other; this information is used to regulate rotational speed of the extruder screw. U.S. 5,128,077 further suggests, at column 2, lines 32 through 36, that upon comparison of the predicted screw-to-line speed ratio of each extruder based on measured dimensions with the predicted screw-to-line speed ratio, adjusting the speed ratio of each extruder by the difference between these ratio values for each extruder.

U.S. 5,128,077 discloses adjusting extruder screw speed using measurements of thickness of the extrudate profile at three locations across the profile and using (i) this measurement, (ii) screw speed data and (iii) line speed measured with multiple sensors, to regulate speed of each extruder screw. This is specifically disclosed at column 4, lines 10-14, where it is disclosed that the width of the extrudate profile W, the screw speeds of each extruder N₁, N₂, N₃ and the line speed U of the takeaway device removing the extrudate from the extruders, are also measured for use in adjustment of the profile measurements. This is also disclosed at column 4, lines 17-19 where it is noted that a plurality of sensors 26 are positioned along the takeaway device 22 to measure the thickness of the extrudate. U.S. 5,128,077 further discloses at column 4, line 37 that the controller, which is preferably a digital computer, collects, calculates and compares qualities based on specified values supplied to the controller. U.S. 5,128,077 further disclosed at column 5, lines 3 through 7 that the ratio is based on measured and specified dimensions are used to calculate the difference to adjust an extruder motor drive speed to bring the extxudate into specification.

U.S. patent 4,784,595 discloses, at column 4, lines 13 through 18, a gravity feed device having an associated additional control loop which controls the drive speed of a variable speed motor under the condition that variation of mass throughput from a set point value determined for the feed device causes motor rotational speed to be corrected. There are no further details disclosed of the manner or means by which such correction is effectuated.

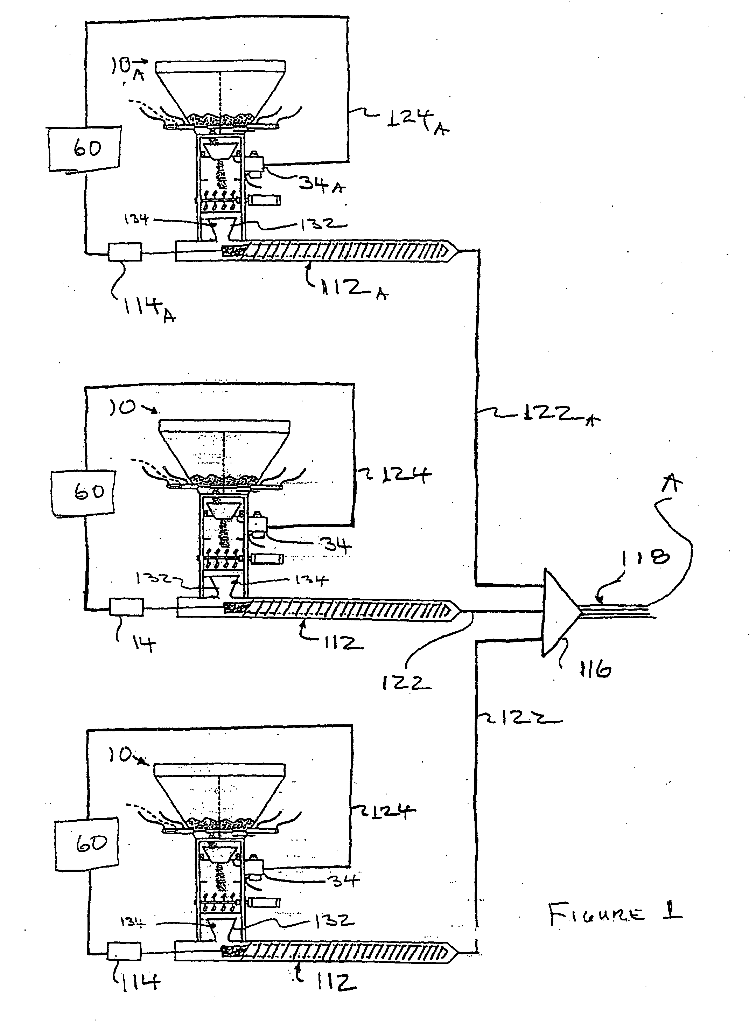

Offenlegungsschrift DE 35 34 734 A1 discloses an extruder having a plurality of screws providing extrudate output 5 measured by sensing device 6 both illustrated in Figure 1. Output from a programmable computer 22 is provided together with the extrudate weight as input to a microprocessor 20. Raw material quanity data is also input to microprocessor 20 as is motor speed of the extruder drive screw. After processing by microprocessor 20, a bus 21 provides an output signal controlling motor drive speed.

Offenlegungsschrift DE 198 20 709 A1 discloses an extruder or a co-extruder 22 providing an output measured at 44 with raw material feed effectuated at 16 and control of raw material feed effectuated by lines 35 and 28 control device 32. Offenlegungsschrift DE 198 20 709 A1 regulates motor speed and raw material input based on measured thickness of output extrudate as disclosed in Figure 3. Offenlegungsschrift DE 198 20 709 A1 supplies a weighing container 18 in Figure 1 in a manner that the container neither runs empty nor overflows by operating according to a simple difference in measured mass over a given time interval in accordance with the equation appearing close to the top of column 4.

### Summary of the Invention

It is the object of the invention to provide a method and an apparatus for precisely maintaining the desired percentage of each layer of the product as the product emerges from the extruder die.

This object is achieved according to the invention by the method as defined in claim 1 and by the apparatus as defined in claim 4.

Particular embodiments of the invention are the subject of the respective dependent claims.

This invention provides a method for controlling batch feeding operation of an extruder using material feed parameter measurements made solely upstream of the extruder screw; there is no feedback or use of parameters measured downstream of the extruder screw. The preferred practice of the method establishes a target extrusion rate for a given product to be extruded. The method then uses the target extrusion rate to compute the mass of the extruded product desired to be produced in a given time interval. The method then proceeds to numerically accumulate the weight of batches of material which are supplied successively to a given extruder. The method then numerically accumulates time for the successively supplied batches to be extruded into actual product. The method then compares the computed mass of the extruded product desired to be produced to the numerically accumulated weight of batches of material which were supplied successively to the extruder. and were used to form the actual product. Finally, the method adjusts motor speed of the extruder if, but only if, the computed mass of material desired to be extruded into the product differs by more than a preselected amount form the numerically accumulated weight of material batches which were actually extruded into the product.

In yet of another of its aspects, this invention provides apparatus for extruding multilayer plastic sheet where the apparatus includes a plurality of extruder screws with each extruder screw including an associated drive motor. The apparatus further includes a feed block connected to the plurality of extruder screws for receiving respective streams of material plasticized by the extruder screws and providing those streams to a sheeting die. The sheeting die combines the streams and dispenses the combined streams as a multilayer sheet produced by the apparatus. The apparatus further includes a plurality of means for providing successive batches of plastic resin material to respective ones of the extruder screws for measuring weight of each batch. The apparatus still yet further includes means for accumulating numerical values of the batch weight separately for each of the extruder screws and separately comparing the separately accumulated numerical values for selected time spans to design values for a particular multilayer sheet being extruded and adjusting motor speeds for the separate extruder screws as necessary according to the results of the comparisons.

In yet in another one of its aspects, this invention provides apparatus for extruding a multilayer plastic sheet where the apparatus includes a plurality of extruder screws each including an associated drive motor, a feed block connected to the plurality of screws for receiving separate streams of material plasticized by the screws and providing those streams to a sheeting die with the sheeting die combining the streams and dispensing the combined streams as a multilayer sheet. In this aspect, the apparatus further comprises at least one gravimetric blender connected to the one of the extruders for providing successive batches of plastic resin material to the connected extruder screw. The gravimetric blender includes a frame, a hopper supported by the frame, a weigh bin connected to the frame beneath the hopper, means for selectively releasing plastic resin material in the hopper for downward flow therefrom into the weigh bin, means connected to the frame for sensing the weight of the weigh bin and any plastic resin material contained therewithin, a mix chamber below the bin connected to the frame, and including mixing means therewithin, means for selectively releasing plastic resin material in the weigh bin downwardly into the mix chamber and means for accumulating numerical values of the batch weights of plastic resin material furnished to the connected extruder screws, comparing the accumulated numerical values for a selected time span to a design value for a particular multilayer sheet being extruded and adjusting motor speed for the extruder screw as necessary according to the result of the comparison.

In this aspect, the apparatus may further include means for sensing level of plastic resin material in the mix chamber and means for releasing plastic resin material from the weigh bin upon level of plastic resin material in the mix chamber falling below the sensing means.

In this aspect of the invention the apparatus may further embody a digital to analog converter for converting a signal provided by the extruder motor speed adjusting means from digital form to analog form for speed control of the motor.

In yet in another of its aspects, this invention embraces apparatus for extruding a multilayer plastic sheet with the apparatus includes a plurality of extruder screws with each extruder screw including an associated drive motor. The apparatus further embraces a feed block connected to the plurality of extruder screws for receiving respective streams for material plasticized thereby and providing the streams to a sheeting die for combining the streams and dispensing the combined streams as a multilayer sheet. The apparatus yet further includes a gravimetric blender connected to one of the extruder screws for providing successive batches of resin material to the connected extruder screws where the gravimetric blender includes a frame, a hopper supported by the frame, a weigh bin beneath the hopper, a pneumatically actuated slide gate for selectively releasing plastic resin material in the hopper for downward flow for material therefrom into the weigh bin and a load cell connected to the frame for sensing weight of the bin and any plastic resin material contained therein. The gravimetric blender preferably further comprises a mix chamber below the weigh bin connected to the frame with a mix chamber including a mixing agitator therewithin driven by a mix agitator drive motor. Preferably, the mix chamber further includes a sensor for indicating a level of plastic resin material in the mix chamber being above or below a pre-selected position. In this aspect of the convention, the gravimetric blender further includes a pneumatically controlled piston-cylinder combination for selectably releasing the resin material in the weigh bin downwardly into the mix chamber.

The gravimetric blender also includes a microprocessor which actuates the slide gate to replenish plastic resin material in the mixed chamber from the weigh bin and the hopper upon level of plastic resin material in the mix chamber falling below the pre-selected position. The microprocessor further serves to accumulate numerical values of the batch weights of material furnished to the connected extruder screw and yet further compares the accumulated numerical values of the batch weights for a selected time span to a design value for a particular multilayer sheet being extruded and provides a digital output signal indicative of the desired extruder screw speed computed to achieve the design value. In this aspect, the apparatus of the invention further includes a digital to analog converter for converting the digital output signal supplied by the microprocessor into a DC analog signal for input to the extruder screw motor, to adjust extruder screw motor speed for the extruder screw according to results of the comparison performed by the microprocessor.

### Brief Description of the Drawings

Figure 1 is a schematic drawing depicting a system of three extruders with associated gravimetric blenders for producing a three layer plastic sheet, in accordance with the best mode known for practicing invention.
Figure 2 is a partially broken schematic view of one of the gravimetric blenders illustrated in Figure 1.
Figure 3 is a flow chart depicting practice of the method aspect of the invention.

### Description of the Preferred Embodiments and Best Mode Known for Practicing the Invention

Referring to the drawings in general and to Figure 1 in particular, this drawing illustrates three extruders where each extruder is designated generally 112. A gravimetric blender is associated with each of the extruders 112, where each gravimetric blender is designated generally 10.

Each extruder has a drive motor, where the motors are all designated 114. Each of the three extruders 112 receives granular plastic resin material from the associated gravimetric blender 10. Rotation of a screw, illustrated schematically within each extruder but not numbered, by an extruder drive motor 114 serves to plasticize the plastic resin material within the extruder housing, also not numbered, as the screw rotates. Rotation of the screw not only plasticizes the granular resin material into plastic form, it urges the plastic resin material out of the narrow discharge opening at the end of the extruder screw housing where the plastic resin material from the three extruders 112 travels via conduits, each of which is designated generally 122 in Figure 1, to a die 116. Within the die, which is sometimes referred to as a sheeting die, the three components of plasticized resin material received from each of the three extruders 112 are combined into a three layer extruded sheet designated generally 118.

Each of the extruder drive motors 114 is connected to a microprocessor depicted schematically and designated 34, which is a part of the associated gravimetric blender 10, via a control line 124. Control, specifically speed regulation, of each drive motor 114 for each extruder 112 is achieved by the associated microprocessor 34. Digital output signal from a microprocessor 34 is converted to analog form by a digital to analog converter 60 prior to input to extrusion screw motor 114. Typically the signal furnished as input to control the extrusion screw motor is between zero and ten volts.

Each extruder 112 includes a surge hopper 132 which receives downwardly discharged plastic resin material from gravimetric blender 10. Within each surge hopper 132, preferably proximate the upper portion thereof, but preferably below a mix agitator portion of the associated gravimetric blender, is a plastic resin material level sensor depicted schematically in Figure 1 and designated 134.

Material level signal supplied by each plastic resin material level sensor 134 is furnished to the associated microprocessor 34 via suitable connections not illustrated in the drawings.

When a microprocessor 34 receives a signal from plastic resin material level sensor 134 indicating that plastic resin material in the associated surge hopper has fallen below the level of sensor 134, microprocessor 34 actuates gravimetric blender 10 to supply one or more batches of plastic resin material to surge hopper 132 to cause the plastic resin material level in surge hopper 132 to rise above the level of sensor 134.

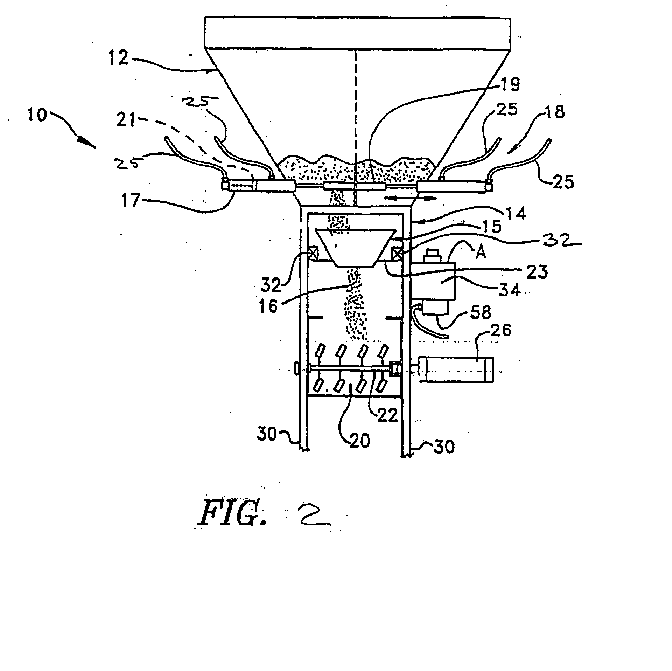

Figure 2 depicts details of one of the gravimetric blenders 10 mounted on extruders 112 in Figure 1. In Figure 2 the gravimetric blender is again designated generally 10 and includes a hopper, designated generally 12, supported by a frame designated generally 14 which holds a weigh bin 15 into which portions of plastic resin material can be metered and weighed prior to release into a mix chamber as described below.

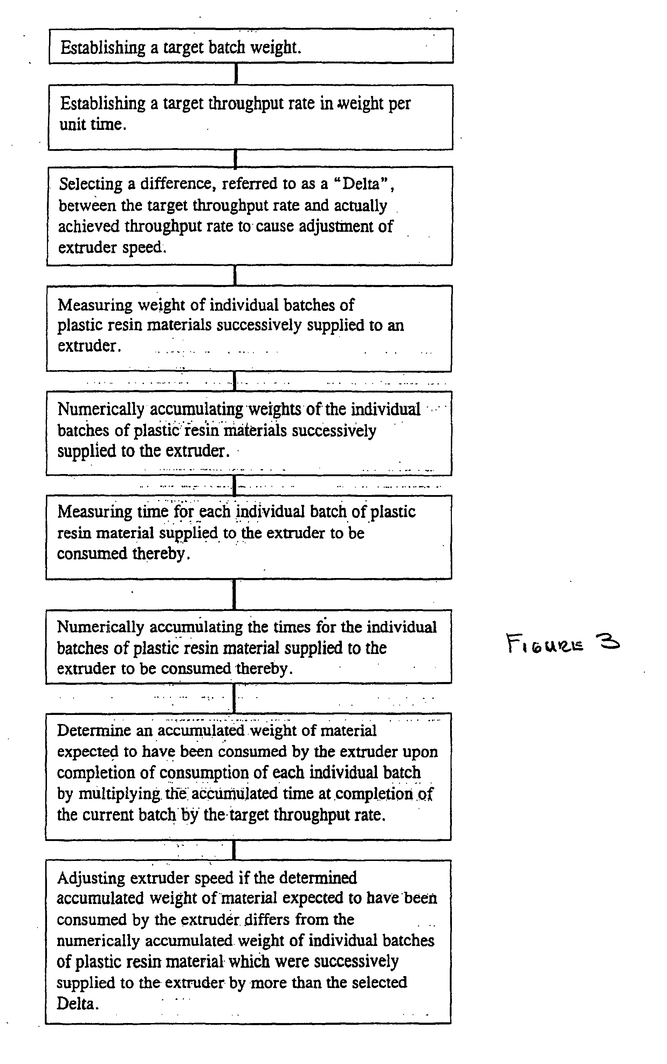

Frame 14 preferably includes upstanding members, which are preferably steel angle iron and are identified 30, with two of upstanding members 30 being illustrated in Figure 3. Frame 14 preferably further includes webs connecting upstanding members 30 together to provide rigidity for frame 14; these webs have not been illustrated in the drawings.

Hopper 12 preferably has multiple internal compartments so that a plurality of different preferably solid plastic resin materials may be dispensed from hopper 12 into weigh bin 15 by suitable slide gates, designated generally 19, located at the bottom of a given compartment of hopper 12.

Gravimetric blender 10 may further include pneumatically actuated piston means 21, housed within cylinders 17, which are connected with hopper 12 via slide gates 19. Piston means 21 operate in response to signals to move slide gates 19 thereby to release material stored within hopper 12 downwardly into weigh bin 15. The pneumatic piston-cylinder actuated slide gate combinations are designated generally 18 in Figure 2.

Alternatively, one or more auger feeders may be used in lieu of one or more slide gates dispensing material from one or more portions of hopper 12. Auger feeders desirably may be used for components which are added at a rate of five percent (5%) or less by weight to the resulting blend to be mixed by the gravimetric blender and then extruded by the extruder and supplied as one component to the sheeting die. Auger feeders add to the cycle time for each batch and reduce overall throughput rates. Hence, auger feeders are desirably used only for addition of low percentage components to be mixed and subsequently provided to the associated extruder 112.

Positioned within and retained in place by frame 14 below weigh bin 15 is a mix chamber 20 having a mixing means which is preferably in the form of a mixing agitator 22 rotatably disposed therewithin. Agitator 22 is preferably mounted for rotation about an axis 24 preferably shared with a mixing agitator drive motor 26. Drive motor 26 is preferably supported by a cantilevered support, which has not been illustrated in the drawing for clarity, extending laterally from an upstanding member 30 of frame 14.

Weight of plastic resin in weigh bin 15 is sensed by one or more load cells 32 which are interposed between weigh bin 15 and frame 14 and which are preferably connected to a microprocessor 34 which regulates operation of gravimetric blender 10 through electrical connection with load cells 32 and with actuators for solenoid valves which control the various pneumatic piston-cylinder combinations, and through electrical connection with mixing agitator drive motor 26. The solenoid valves are not visible in Figure 2; the solenoid values are desirably within a manifold housing 58 shown below microprocessor 34.

Each microprocessor 34 controls the associated gravimetric blender 10 in part by monitoring weight of plastic resin material, if any, at a weighing station defined by weigh bin 15. By sensing weight of weigh bin 15, including any plastic resin material contained therein, and opening appropriate slide gates 19 via actuation of solenoid valves controlling associated piston-cylinder combinations 18, microprocessor 34 serially meters respective components of granular plastic resin material to the weighing station defined by weigh bin 15 so that a selected weight of each of the respective components is at the weigh station.

Each gravimetric blender 10 blends the components which are supplied by weight based on settings on a controller portion of microprocessor 34. Each component is preferably dispensed separately into weigh bin 15 and then all components are dropped together into mixing chamber 20.

One gravimetric blender 10 is preferably mounted directly over each feed throat of an associated extruder 112 to extrude the plastic resin material, with each gravimetric blender 10 being bolted or otherwise fixedly connected to the associated extruder 112, as shown in Figure 1.

When solid plastic resin material is being blended by a given gravimetric blender 10, regrind material may be dispensed first from one compartment of hopper 12 according to the percent of any regrind material required. If no regrind material or a limited amount of regrind material is present, then portions of natural material, solid color material and additive material may be added from respective compartments of hopper 12 according to a specified recipe to bring about a full batch weight. Natural material may be added, typically second, to the material already in the weigh bin from a respective compartment of hopper 12. Once natural material fill has been completed, the weight of natural material that has been added may be determined to detect any filling error. Based on this actual weight of natural material dispensed, color additive in the form of solid color additive material may be metered into the weigh bin and other solid additive materials may be metered into the weigh bin in the same manner. Once the resulting batch has been weighed, all components are then dropped into mixing chamber 20, in which mixing agitator 22 may preferably be continuously running.

Microprocessor 34 provides the serially metered components, which have been serially metered to weigh bin 15, as a unitary batch to a mixing station defined by mix chamber 20. This is done by microprocessor 34 actuating a suitable solenoid valve which in turn actuates a pneumatic piston-cylinder combination to open weigh bin 15 by moving a preferably hinged bottom dump flap portion of the weigh bin, permitting plastic resin material vertically supported thereby to fall downwardly into mix chamber 20. The movable bottom portion of weigh bin 15 opened by a pneumatic piston-cylinder combination controlled by microprocessor 34 has not been illustrated, for drawing clarity. The pneumatic piston-cylinder combination is preferably mounted on frame 14 and preferably only contacts weigh bin 15 during actuation of the piston-cylinder combination, when weigh bin 15 opens responsively to movement of the piston member of the piston-cylinder combination.

In mix chamber 20 the plastic resin material components which have been preferably unitarily supplied and serially metered to weigh bin 15 are mixed into a blend preparatory to being supplied to the associated extruder 112.

Desirably, monitoring of weight of material at a weighing station defined by a weigh bin 15 is performed continuously by the associated microprocessor 34 continuously digitally sensing signals supplied by the load cells depicted schematically in Figure 2 and identified generally 32 therein; the load cells are interposed between weigh bin 15 and frame 14. Weigh bin 15 is suspended by and from load cells 32 with respect to frame 14. Depending on the size of weigh bin 15, a single load cell or multiple load cells may be used.

Each microprocessor 34 actuates associated solenoid controlled preferably pneumatic valves of the associated gravimetric blender 10, which valves are not illustrated in Figure 2, to provide pneumatic pressure via suitable conduits to piston-cylinder/slide gate combinations 18. The solenoid valves are preferably each individually connected via two suitable conduits, which are preferably flexible plastic tubing, to associated individual piston-cylinder/slide gate combinations 18 to open and close individual slide gates 19 of the associated gravimetric blender 10 by application of pneumatic pressure to an appropriate side of a piston 21 within a cylinder 17.

Each solenoid valve, specifically the core of the solenoid, is spring-biased towards a position corresponding to that at which the piston member 21 of a piston-cylinder/slide gate combination 18 associated with a given solenoid valve is at a preferred position, referred to as the default position, for operation of gravimetric blender 10. When there is a change in operational factors such as need for additional plastic resin material in mix chamber 20 or need for additional material in weigh bin 32 or for additional material in surge hopper 132, microprocessor 34 actuates a given piston of a piston-cylinder/slide gate combination 18. For example it might be necessary to open one of the compartments within hopper 12 to add an amount of material in that compartment to weigh bin 15. In such case microprocessor 34 actuates the solenoid valve associated with the given piston-cylinder slide gate combination 18 of interest, thereby moving the piston member of the appropriate piston-cylinder/slide gate combination 18 from the default position to a position at which a given slide gate 19 is open, permitting material to flow downwardly from the associated compartment of hopper 12 into weigh bin 15.

The solenoid-actuated valves move pistons 21 within air cylinders 17 by pressurizing one side of a piston 21 within a cylinder 17 and opening the other side to the atmosphere. There is no vacuum involved, just pressure above atmospheric and ambient atmospheric pressure.

Each solenoid valve in a gravimetric blender 10, in the normally at rest or default state of the valve, connects pressurized air to an "A" port and ambient air to a "B" port. When the valve is energized the A port is switched to ambient air and the B port is switched to pressurized air. Two air lines 25 preferably connect each solenoid-actuated valve to a given air cylinder with one solenoid-actuated valve being provided for and connected to each air cylinder. At rest or default, a piston 21 within a given air cylinder 17 is preferably extended so that the slide gate 19 actuated by piston 21 is closed. When the associated valve is energized, piston 21 retracts, the associated slide gate 19 opens and material in the corresponding compartment of hopper 12 is dispensed downwardly. Solenoid-actuated valves preferably actuate not only the weigh bin dump, they further may be used to operate an optional flow control valve to regulate an optional exit opening between the bottom of a gravimetric blender 10 and an associated extruder 112. If the gravimetric blender 10 is fitted with such a flow control opening at the bottom, the flow control valve may hold plastic resin material in mix chamber 20 for a selected time, for better mixing.

The gravimetric blender illustrated in detail in Figure 2 has two load cells 32. Larger capacity gravimetric blenders are desirably provided with two load cells as illustrated whereas smaller capacity gravimetric blenders utilize only a single load cell.

During operation, a targeted extrusion rate is established for each component of the three layer extruded sheet or other extruded product 18 to be provided from sheeting die 16. For example, the gravimetric blender, the extruder, the drive motor and associated equipment used to provide the first plasticized component, which defines the first of the three layers of the three layer extruded sheet 18, have been labeled with a subscript "A" in Figure 1 to correspond to the first layer of the three layer extruded sheet, which has also been identified "A" in Figure 1.

During operation, a target extrusion rate for layer A is established in order for microprocessor 34A to determine the amount of extruded product, namely constituent layer A, desired to be produced in a given time interval. Microprocessor 34A then accumulates weight of batches of material which are successively supplied by gravimetric blender 10A to extruder 112A. Microprocessor 34A further accumulates time for the successively supplied batches of plastic resin material from gravimetric blender 10A to be extruded by extruder screw 112A into plasticized material to form a part of the final three layer sheet produced by sheeting die 116. Microprocessor 34A then compares the determined amount of the extruded product desired to be produced to the numerically accumulated weight of batches of material which had been supplied successively by gravimetric blender 10A to extruder screw 12A. Microprocessor 34A then directly adjusts speed of drive motor 114A if but only if the computed amount of material desired to be extruded into layer A of the three layer product differs by more than a pre-selected amount from the numerically accumulated weight of material batches which were extruded to form constituent layer A of the final three layer product.

The process is illustrated schematically in Figure 3.

In one practice of the invention a target extrusion rate for a given product to be extruded is entered by an operator into a microprocessor associated with a gravimetric blender 10 feeding a given extruder 112. This target extrusion rate is then converted by the microprocessor 34 for the gravimetric blender 10 associated with the extruder 112 of interest to a number equal to the weight in grams of the product of interest produced in one hour by extruder 112 and furnished to die 116.

From such a start point, the weight of each successive batch is added and accumulated by microprocessor 34 of gravimetric blender 10. The time for consumption by an extruder 112 of each batch of material furnished by gravimetric blender 10 to the extruder 112, measured in tenths of seconds, is also accumulated by microprocessor 34 of gravimetric blender 10.

Using the target extrusion rate, which has previously been entered into microprocessor 34 by the machine operator (or, alternatively, by using a target extrusion rate determined from a previous series of cycles of material supply by the gravimetric blender to the extruder), microprocessor 34 performs a series of computations. The target extrusion rate in grams per hour is multiplied by the accumulated time in tenths (1/10) of seconds and divided by thirty-six thousand (3600), which is the number of tenths of seconds in one hour, to produce a "target weight" of material which should have been consumed in the accumulated time if extruder 112 processed the material supplied to it in batches by gravimetric blender 10 according to the target extrusion rate. Microprocessor 34 then compares this "target weight" to the accumulated weight and computes a weight error, referred to as a "delta", by subtraction of the target weight from the accumulated weight.

Microprocessor 34 then compares the absolute value of delta to a preselected constant. If delta is smaller than the preselected constant, extruder 112 is permitted to continue to operate at the same rate. If delta is larger than the constant, a new speed for the extruder motor is determined and furnished directly by microprocessor 34 as a motor control signal to the extruder motor 114 after conversion from digital to analog form by digital to analog converter 50 illustrated in Figure 1.

The following illustrates one practice of the invention:

In this example, the target weight of a batch of plastic resin material to be extruded is 1,000 grams. The target extrusion rate is 60 kilograms per hour which is a 1,000 gram batch of resin material every 60 seconds or one minute. The selected delta, namely deviation of the actual extruded weight of material from the target extrusion weight of material, is 40 percent of a single batch weight or 400 grams. Upon the selected delta exceeding 400 grams, a new extruder speed is determined to correct the error.

As the table below indicates, a first batch of material supplied by gravimetric blender 110 to extruder 112 weighed 1,006 grams. The extrusion time for that batch of material was measured as 60 seconds. Since weight of the extruded batch of material exceeded weight of the target batch by six grams, the "Delta weight" figure is six (6). All of this data is indicated for batch number 1 in the table below.

| Batch Number | Batch Weight (grams) | Accumulated Actual Batch Weight (grams) | Batch Cycle Time (seconds) | Accumulated Batch Cycle Times (seconds) | Expected Accumulated Weight (grams) | Delta Weight (grams) |
|---|---|---|---|---|---|---|
| 1 | 1006 | 1006 | 60 | 60 | 1000 | 6 |
| 2 | 998 | 1994 | 54 | 114 | 1900 | 94 |
| 3 | 995 | 2999 | 56 | 170 | 2833 | 166 |
| 4 | 1002 | 4001 | 59 | 229 | 3816 | 185 |
| 5 | 1023 | 5024 | 49 | 278 | 4633 | 391 |
| 6 | 999 | 6023 | 55 | 333 | 5550 | 473 |

The procedure is repeated with successively supplied batches, numbered 2 through 6, furnished by gravimetric blender 10 to extruder 112, with each batch weight being measured and added to the accumulated total, with each batch extrusion time being measured and the expected or target weight computed based on actual accumulated time elapsed and on the target rate of 60 grams per hour of plastic resin material consumed through extrusion.

For example, with respect to batch 3, the accumulated actual batch cycle time is 170 seconds. The figure of 170 seconds is divided by 3,600 seconds per hour and this quotient multiplied by 60 kilograms per hour to arrive at the figure of 2,833 grams as the expected or target weight of material which should have been consumed at the end of consumption of batches 1, 2 and 3. The expected or target weight of material consumed, namely 2,833 grams, is subtracted from the actual accumulated batch weight of 2,999 grams, to yield the "Delta weight" of 473 grams. Note that the target weight corresponding to each batch is computed based on the accumulated cycle time including the time for the current batch but is not an accumulated number. Rather, the target weight is newly computed at the conclusion of feeding of each batch.

In the example, the Delta weight of 473 at the conclusion of processing batch 6 exceeds the selected Delta, which is the allowable deviation of the actual extruded weight of material from the targeted extruded weight of material, namely 400 grams in this example. Hence a new extruder speed is calculated to correct this error. Because the error was positive, meaning that the actual accumulated weight of extruded material exceeded the target accumulated weight, extruder speed is decreased proportionately to the error. Since the computed error, namely the Delta weight, over six cycles was 473 grams, which averages to 78 grams per cycle, the correction in reduced extruder speed is 78, which is divided by 1,000 or 7.8%. Once extruder speed is reduced by this amount, the accumulator portions of the microprocessor are cleared and tracking performance of the extruder for the individual batches commences anew.

The same procedure is used by other microprocessors 34 associated with the other gravimetric blenders 10 to control operation of the other extruders 112 in the course of providing plasticized resin material for combination in die 116 to form the final three layer extruded sheet 118.

Using the approach of this invention, batch-to-batch errors, so long as those errors remain within a reasonable range, do not trigger any adjustment of extruder motor speed. However, even the smallest actual error, defined as target extrusion rate differing from actual rate, produces a cumulative growing error. The cumulatively growing error will ultimately exceed the preselected constant. Once the cumulative growing error exceeds the preselected constant, the microprocessor calculates a correction which is used to compensate and precisely adjust extruder motor speed based on the sensed error.

The invention precisely accounts for actual rates and times involved in the batch feeding of the extruder without any dilution of the weight or time data. The approach of the invention eliminates the hunting associated with known and predictably inconsistent batch process feeding and feedback.

## Claims

1. A method for controlling batch feed operation of an extruder screw (112) including establishing a target extrusion rate for a given product to be extruded, using the target extrusion rate to compute mass of extruded product desired to be produced in a given time interval, supplying batches of plastic resin material to the extruder screw (112), measuring time for consumption of the batches supplied to the extruder, **characterised by** adjusting extruder motor speed based on material feed parameter measurements made solely upstream of the extruder screw (112) by:
a) successively supplying individually weighed batches of plastic resin material to the extruder screw (112);
b) measuring time for consumption of the individually weighed batches of plastic material which are successively supplied to the extruder screw (112);
c) numerically accumulating weight of the batches of material which are supplied to the extruder screw (112);
d) numerically accumulating time for the successively supplied batches to be extruded into actual products;
e) comparing the computed mass of extruded product desired to be produced to the numerically accumulated weight of batches of material which had been supplied successively to the extruder screw (112); and;
f) adjusting extruder motor (114) speed if the computed mass of material desired to be extruded into product differs by more than a preselected amount from the numerically accumulated weight of material batches which were extruded into actual product.

2. The method of claim 1 further **characterised by**:
a) generating a digital signal based on the results of the comparison of the computed amount of extruded product desired to be produced to the numerically accumulated weight of batches of material which had been supplied successively to the extruder; and
b) converting the digital signal to analog form for input to the extruder motor (114) according to the result of the comparison of computed mass of material desired to be extruded into product differing by more than the preselected amount from the numerically accumulated weight of material batches extruded into actual product.

3. The method of claim 2 further **characterised by** the converting being performed continuously.

4. Apparatus for extruding a multilayer plastic sheet including a plurality of extruder screws (112) each including an associated drive motor (114), a feed block connected to the plurality of extruder screws (112) for receiving respective streams of material plasticised thereby and providing the streams to a sheeting die (116) for combining the streams and dispensing the combined streams as a multilayer sheet (118) and a plurality of means for providing successive batches of resin material to respective ones of the extruder screws, **characterised by**:
a) the plurality of means for providing successive batches of resin material to respective ones of the extruder screws having means for measuring weight of each batch provided; and
b) a plurality of means for accumulating numerical values of the batch weights separately for each of the extruder screws (112), separately comparing the separately accumulated numerical values for selected time spans to design values for a particular multilayer sheet being extruded and adjusting motor speeds for the separate extruder screws(112) as necessary according to the results of the comparison based onbatch weights of such material solely as provided to the extruder screw (112) prior to processing thereby.

5. Apparatus of claim 4 wherein the means for providing successive batches of resin material to respective ones of the extruder screws include at least one gravimetric blender (10) connected to at least one of the extruder screws (112) for providing successive batches of resin material to the connected extruder screw (112), with the gravimetric blender being
**characterised by**:
i. a frame (14);
ii. a hopper (12) supported by the frame (14);
iii. a weigh bin (15) beneath the hopper (14);
iv. means (18) for selectably releasing plastic resin material in the hopper (14) for downward flow therefrom into the weigh bin(15);
v. means (32), connected to the frame (14), for sensing weight of the bin (15) and any plastic resin material contained therein;
vi. a mix chamber (20) below the bin (15), connected to the frame (14), including mixing means (22) therewithin;
vii. means for selectably releasing plastic resin material in.the weigh bin downwardly into said mix chamber; and
wherein the means for accumulating numerical values of the batch weights for the connected extruder screw (112) and comparing the accumulated numerical values for a selected time span to a design value for a particular multilayer sheet being extruded and adjusting motor speed for the extruder screw (112) as necessary according to result of said comparison is operatively associated with the means for sensing weight of the bin and any plastic resin material contained therein.

6. Apparatus of claim 5 which further comprises:
a) means (134) for sensing level of plastic resin material in the mix chamber (20); and
b) said means for accumulating, comparing and adjusting further comprises means for replenishing plastic resin material in the mix chamber (20) from the weigh bin (15) and the hopper (12) upon level of plastic resin material in the mix chamber (20) falling below the sensing means (134).

7. Apparatus of claim 6 wherein the extruder motor (114) speed adjusting means includes a digital to analog converter.

8. Apparatus of claim 7 wherein the extruder motor (114) speed adjusting means provides a continuous D.C. signal for controlling extruder motor speed.

9. Apparatus of claim 8 wherein the means for accumulating, comparing and adjusting performs accumulating, comparing and adjusting periodically.

10. Apparatus of claim 9 wherein the material lever sensor (134) is below said mixing means.

11. Apparatus of Claim 5 further **characterised by**:
a) a sensor (134) for indicating level of plastic resin material in said mix chamber (20) being above or below a preselected position; and
b) a pneumatically controlled piston-cylinder combination for selectably releasing plastic resin material in the weigh bin (15) downwardly into said mix chamber (20);
and wherein the means for accumulating numerical values and adjusting motor speed includes a microprocessor (34) which is operatively connected to actuate the slide gate to replenish plastic resin material in the mix chamber (20) from the weigh bin (15) and the hopper (14) upon level of plastic resin material in the mix chamber (20) falling below the preselected position and to provide a digital output signal indicative of desired extruder screw speed computed to achieve the design value; and
a digital to analog converter (60) for converting the digital output signal for input as a D.C. analog signal to the extruder screw motor (114) to adjust motor speed according to result of the comparison.

## Patentansprüche

1. Ein Verfahren zum Steuern eines Ladungszuführungsvorgangs einer Extruderschnecke (112), das das Festlegen einer Zielextrusionsgeschwindigkeit für ein gegebenes Produkt, das extrudiert werden soll, das Verwenden der Zielextrusionsgeschwindigkeit zum Berechnen der Masse eines extrudierten Produkts, das in einem gegebenen Zeitabschnitt produziert werden soll, das Liefern von Kunststoffharzmaterialladungen an die Extruderschnecke (112), das Messen der Zeit zum Verbrauch der an den Extruder gelieferten Ladungen umfasst, **gekennzeichnet durch** das Einstellen der Drehzahl des Extrudermotors auf der Basis der Materialzufuhrparametermessungen, die lediglich stromaufwärts der Extruderschnecke (112) **durch** Folgendes vorgenommen wurden:
a) sukzessives Liefern von einzeln gewogenen Kunststoffharzmaterialladungen an die Extruderschnecke (112);
b) Messen der Zeit zum Verbrauch der einzeln gewogenen Kunststoffmaterialladungen, die sukzessiv an die Extruderschnecke (112) geliefert werden;
c) numerisches Akkumulieren des Gewichts der Materialladungen, die an die Extruderschnecke (112) geliefert werden;
d) numerisches Akkumulieren von Zeit für die sukzessiv gelieferten Ladungen, die in die eigentlichen Produkte extrudiert werden sollen;
e) Vergleichen der berechneten Masse an extrudiertem Produkt, das zu dem numerisch akkumulierten Gewicht der Materialladungen, die sukzessiv an die Extruderschnecke (112) geliefert worden waren, produziert werden soll; und;
f) Einstellen der Drehzahl des Extrudermotors (114), wenn die berechnete Masse des Materials, das in das Produkt extrudiert werden soll, um mehr als einen vorausgewählten Betrag von dem numerisch akkumulierten Gewicht der Materialladungen, die in das eigentliche Produkt extrudiert wurden, abweicht.

2. Verfahren gemäß Anspruch 1, ferner **gekennzeichnet durch**:
a) Erzeugen eines digitalen Signals auf der Basis der Ergebnisse des Vergleichs des berechneten Betrags an extrudiertem Produkt, das zu dem numerisch akkumulierten Gewicht der Materialladungen, die an den Extruder sukzessiv geliefert worden waren, produziert werden soll; und
b) Umwandeln des digitalen Signals in analoge Form zur Eingabe in den Extrudermotor (114) gemäß dem Ergebnis des Vergleichs der berechneten Masse des Materials, das in Produkt extrudiert werden soll, und die um mehr als den vorausgewählten Betrag von dem numerisch akkumulierten Gewicht der in das eigentliche Produkt extrudierten Materialladungen abweicht.

3. Verfahren gemäß Anspruch 2, das ferner durch das kontinuierlich durchgeführte Umwandeln gekennzeichnet ist.

4. Vorrichtung zum Extrudieren einer mehrlagigen Kunststoffschicht, die eine Vielzahl von Extruderschnecken (112), die jeweils einen zugehörigen Antriebsmotor (114) umfassen, einen an die Vielzahl von Extruderschnecken (112) zum Empfangen der jeweiligen Ströme von dadurch plastiziertem Material und zum Bereitstellen der Ströme an eine Schlitzdüse (116), um die Ströme zu kombinieren und die kombinierten Ströme als eine mehrlagige Schicht (118) auszugeben, angeschlossenen Feedblock sowie eine Vielzahl von Mitteln zum Bereitstellen von sukzessiven Harzmaterialladungen an die jeweiligen Extruderschnecken umfasst, **gekennzeichnet durch**:
a) die Vielzahl von Mitteln zum Bereitstellen sukzessiver Harzmaterialladungen an die jeweiligen Extruderschnecken, die ein Mittel zum Messen des Gewichts jeder bereitgestellten Ladung aufweist; und
b) eine Vielzahl von Mitteln zum Akkumulieren numerischer Werte der Ladungsgewichte separat für jede Extruderschnecke (112), die die separat akkumulierten numerischen Werte für ausgewählte Zeitspannen separat vergleicht, um Werte für eine bestimmte mehrlagige Schicht, die extrudiert wird, zu erzeugen, und die Motordrehzahlen für die separaten Extruderschnecken (112) wie notwendig gemäß den Ergebnissen der Vergleiche auf der Basis der Ladungsgewichte derartigen Materials, wie der Extruderschnecke (112) vor dem Bearbeiten **dadurch** lediglich bereitgestellt, einstellt.

5. Vorrichtung gemäß Anspruch 4, wobei die Mittel zum Bereitstellen sukzessiver Harzmaterialladungen an die jeweiligen Extruderschnecken mindestens einen Schwerkraftmischer (10) umfasst, der an mindestens eine der Extruderschnecken (112) angeschlossen ist, um sukzessive Harzmaterialladungen an die angeschlossene Extruderschnecke (112) bereitzustellen, wobei der Schwerkraftmischer durch Folgendes gekennzeichnet ist:
i. ein Gestell (14);
ii. einen vom Gestell (14) gestützten Trichter (12);
iii. einen Wiegebehälter (15) unter dem Trichter (14);
iv. ein Mittel (18) zur selektiven Freigabe von Kunststoffharzmaterial in dem Trichter (14) zum Herunterfließen davon in den Wiegebehälter (15);
v. ein an das Gestell (14) angeschlossenes Mittel (32) zum Abmessen des Gewichts des Behälters (15) und jeglichen darin enthaltenen Kunststoffharzmaterials;
vi. eine an das Gestell (14) angeschlossene Mischkammer (20) unter dem Behälter (15), die Mischmittel (22) damit umfasst;
vii. ein Mittel zur selektiven Freigabe von Kunststoffharzmaterial in dem Wiegebehälter nach unten in die Mischkammer; und
wobei das Mittel zum Akkumulieren numerischer Werte der Ladungsgewichte für die angeschlossene Extruderschnecke (112) und zum Vergleichen der akkumulierten numerischen Werte für eine ausgewählte Zeitspanne, um einen Design-Wert für eine bestimmte mehrlagige Schicht, die extrudiert wird, zu erzeugen, und zum Einstellen der Motordrehzahl für die Extruderschnecke (112) wie notwendig gemäß dem Ergebnis des Vergleichs mit dem Mittel zum Abmessen des Gewichts des Behälters und jeglichen darin enthaltenen Kunststoffharzmaterials wirksam verbunden ist.

6. Vorrichtung gemäß Anspruch 5, die ferner Folgendes beinhaltet:
a) ein Mittel (134) zum Abmessen des Niveaus von Kunststoffharzmaterial in der Mischkammer (20); und
b) das Mittel zum Akkumulieren, Vergleichen und Einstellen, das ferner ein Mittel zum Nachfüllen von Kunststoffharzmaterial in die Mischkammer (20) aus dem Wiegebehälter (15) und dem Trichter (12) nach dem Fallen des Niveaus von Kunststoffharzmaterial in der Mischkammer (20) unter das Abmessmittel (134) beinhaltet.

7. Vorrichtung gemäß Anspruch 6, wobei das Mittel zum Einstellen der Drehzahl des Extrudermotors (114) einen D/A-Wandler umfasst.

8. Vorrichtung gemäß Anspruch 7, wobei das Mittel zum Einstellen der Drehzahl des Extrudermotors (114) ein kontinuierliches Gleichstromsignal zum Steuern der Drehzahl des Extrudermotors bereitstellt.

9. Vorrichtung gemäß Anspruch 8, wobei das Mittel zum Akkumulieren, Vergleichen und Einstellen das Akkumulieren, Vergleichen und Einstellen periodisch durchführt.

10. Vorrichtung gemäß Anspruch 9, wobei der Materialniveausensor (134) unter dem Mischmittel liegt.

11. Vorrichtung gemäß Anspruch 5, ferner **gekennzeichnet durch**:
a) einen Sensor (134) zum Anzeigen des Niveaus von Kunststoffharzmaterial in der Mischkammer (20), das über oder unter der vorausgewählten Position liegt; und
b) eine pneumatisch gesteuerte Kolben-Zylinder-Kombination zur selektiven Freigabe von Kunststoffharzmaterial in dem Wiegebehälter (15) nach unten in die Mischkammer (20);
und wobei das Mittel zum Akkumulieren numerischer Werte und zum Einstellen der Motordrehzahl einen Mikroprozessor (34), der wirksam angeschlossen ist, um den Schieber zum Nachfüllen von Kunststoffharzmaterial in die Mischkammer (20) aus dem Wiegebehälter (15) und dem Trichter (14) nach dem Fallen des Niveaus von Kunststoffharzmaterial in der Mischkammer (20) unter die vorausgewählte Position zu betätigen und ein digitales Ausgangssignal, das die gewünschte berechnete Extruderschneckendrehzahl anzeigt, um den Erzeugungswert zu erzielen, bereitzustellen; und einen D/A-Wandler (60) zum Umwandeln des digitalen Ausgangssignals zur Eingabe als ein analoges Gleichstromsignal in den Extruderschneckenmotor (114) zum Einstellen der Motordrehzahl gemäß dem Ergebnis des Vergleichs umfasst.

## Revendications

1. Un procédé destiné à commander l'opération d'alimentation par lots d'une vis d'extrudeuse (112) comprenant l'établissement d'un taux d'extrusion cible pour extruder un produit donné, l'utilisation du taux d'extrusion cible pour calculer la masse de produit extrudé qu'il est souhaité produire dans un intervalle de temps donné, la fourniture de lots de matière résineuse plastique à la vis d'extrudeuse (112), la mesure du temps de consommation des lots fournis à l'extrudeuse, **caractérisé par** le réglage de la vitesse de moteur d'extrudeuse sur la base de mesures de paramètres d'alimentation en matière faites uniquement en amont de la vis d'extrudeuse (112) :
a) en fournissant successivement des lots individuellement pesés de matière résineuse plastique à la vis d'extrudeuse **(112);**
b) en mesurant le temps de consommation des lots individuellement pesés de matière plastique qui sont fournis successivement à la vis d'extrudeuse (112) ;
c) en accumulant numériquement le poids des lots de matière qui sont fournis à la vis d'extrudeuse (112) ;
d) en accumulant numériquement le temps pour extruder les lots fournis successivement en produits réels ;
e) en comparant la masse calculée de produit extrudé qu'il est souhaité produire au poids accumulé numériquement de lots de matière qui avaient été fournis successivement à la vis d'extrudeuse (112); et;
f) en réglant la vitesse du moteur d'extrudeuse (114) si la masse calculée de matière qu'il est souhaité extruder en produit diffère de plus d'une quantité présélectionnée du poids accumulé numériquement de lots de matière qui ont été extrudés en produit réel.

2. Le procédé de la revendication 1 **caractérisé de plus par** :
a) la génération d'un signal numérique sur la base des résultats de la comparaison de la quantité calculée de produit extrudé qu'il est souhaité produire avec le poids accumulé numériquement de lots de matière qui avaient été fournis successivement à l'extrudeuse ; et
b) la conversion du signal numérique en forme analogique pour l'entrer dans le moteur d'extrudeuse (114) selon que le résultat de la comparaison de la masse calculée de matière qu'il est souhaité extruder en produit diffère de plus de la quantité présélectionnée du poids accumulé numériquement de lots de matière extrudés en produit réel.

3. Le procédé de la revendication 2 **caractérisé de plus par le fait que** la conversion est effectuée de façon continue.

4. Appareil destiné à extruder une feuille plastique multicouche comprenant une pluralité de vis d'extrudeuse (112) comprenant chacune un moteur d'entraînement associé (114), un bloc d'alimentation raccordé à la pluralité de vis d'extrudeuse (112) destiné à recevoir des nappes respectives de matière plastifiée de cette manière et à fournir les nappes à une filière pour feuilles continues (116) destinée à combiner les nappes et à livrer les nappes combinées en une feuille multicouche (118) et une pluralité de moyens destinés à fournir des lots successifs de matière résineuse à des vis d'extrudeuse respectives parmi celles-ci, **caractérisé par** :
a) la pluralité de moyens destinés à fournir des lots successifs de matière résineuse à des vis d'extrudeuse respectives parmi celles-ci ayant des moyens destinés à mesurer le poids de chaque lot fourni ; et
b) une pluralité de moyens destinés à accumuler des valeurs numériques des poids de lots séparément pour chacune des vis d'extrudeuse (112), à comparer séparément les valeurs numériques accumulées séparément pour des espaces de temps sélectionnés afin de désigner des valeurs pour une feuille multicouche particulière en train d'être extrudée et à régler des vitesses de moteur pour les vis d'extrudeuse séparées (112) suivant le besoin selon les résultats de la comparaison sur la base de poids de lots de cette matière qui est uniquement fournie à la vis d'extrudeuse (112) avant d'être traitée de cette manière.

5. Appareil de la revendication 4 dans lequel le moyen destiné à fournir des lots successifs de matière résineuse à des vis d'extrudeuse respectives parmi celles-ci comprend au moins un mélangeur gravimétrique (10) raccordé à au moins une des vis d'extrudeuse (112) destiné à fournir des lots successifs de matière résineuse à la vis d'extrudeuse raccordée (112), le mélangeur gravimétrique étant **caractérisé par** :
i. un cadre (14) ;
ii. une trémie (12) soutenue par le cadre (14) ;
iii. un récipient de pesée (15) au-dessous de la trémie (14) ;
iv. un moyen (18) destiné à libérer de façon sélectionnable de la matière résineuse plastique dans la trémie (14) pour qu'elle s'écoule vers le bas depuis cette-ci jusque dans le récipient de pesée (15) ;
v. un moyen (32), raccordé au cadre (14), destiné à détecter le poids du récipient (15) et toute matière résineuse plastique qui y est contenue ;
vi. une chambre à mélange (20) au-dessous du récipient (15), raccordée au cadre (14), comprenant un moyen de mélange (22) au sein de celle-ci ;
vii. un moyen destiné à libérer de façon sélectionnable de la matière résineuse plastique dans le récipient de pesée vers le bas jusque dans ladite chambre de mélange ; et
dans lequel le moyen destiné à accumuler des valeurs numériques des poids de lots pour la vis d'extrudeuse raccordée (112) et à comparer les valeurs numériques accumulées pendant un espace de temps sélectionné à une valeur désignée pour une feuille multicouche particulière en train d'être extrudée et à régler la vitesse de moteur pour la vis d'extrudeuse (112) suivant le besoin selon le résultat de ladite comparaison est associé de façon opérationnelle au moyen destiné à détecter le poids du récipient et toute matière résineuse plastique qui y est contenue.

6. Appareil de la revendication 5, lequel comporte de plus :
a) un moyen (134) destiné à détecter le niveau de matière résineuse plastique dans la chambre à mélange (20) ; et
b) ledit moyen destiné à accumuler, comparer et régler comporte de plus un moyen pour réapprovisionner la chambre à mélange (20) en matière résineuse plastique provenant du récipient de pesée (15) et de la trémie (12) lorsque le niveau de matière résineuse plastique dans la chambre à mélange (20) tombe au-dessous du moyen de détection (134).

7. Appareil de la revendication 6 dans lequel le moyen de réglage de vitesse de moteur d'extrudeuse (114) comprend un convertisseur numérique-analogique.

8. Appareil de la revendication 7 dans lequel le moyen de réglage de vitesse de moteur d'extrudeuse (114) fournit un signal CC continu destiné à commander la vitesse de moteur d'extrudeuse.

9. Appareil de la revendication 8 dans lequel le moyen destiné à accumuler, comparer et régler effectue l'accumulation, la comparaison et le réglage périodiquement.

10. Appareil de la revendication 9 dans lequel le détecteur de niveau de matière (134) est au-dessous dudit moyen de mélange.

11. Appareil de la revendication 5 **caractérisé de plus par** :
a) un détecteur (134) destiné à indiquer si le niveau de matière résineuse plastique dans ladite chambre à mélange (20) est au-dessus ou au-dessous d'une position présélectionnée ; et
b) une combinaison piston-cylindre commandée de façon pneumatique pour libérer de la matière résineuse plastique de façon sélectionnable dans le récipient de pesée (15) vers le bas jusque dans ladite chambre à mélange (20) ;
et dans lequel le moyen destiné à accumuler des valeurs numériques et à régler la vitesse de moteur comprend un microprocesseur (34), lequel est raccordé de façon opérationnelle pour activer la vanne glissante afin de réapprovisionner la chambre à mélange (20) en matière résineuse plastique provenant du récipient de pesée (15) et de la trémie (14) lorsque le niveau de matière résineuse plastique dans la chambre à mélange (20) tombe au-dessous de la position présélectionnée et pour fournir un signal de sortie numérique indiquant la vitesse souhaitée de vis d'extrudeuse calculée pour parvenir à la valeur désignée ; et
un convertisseur numérique-analogique (60) destiné à convertir le signal de sortie numérique pour qu'il soit entré en signal analogique CC dans le moteur de vis d'extrudeuse (114) afin de régler la vitesse de moteur selon le résultat de la comparaison.
